# EUROPEAN PATENT SPECIFICATION

(11) **EP 3 724 247 B1**
(45) Date of publication and mention of the grant of the patent: **07.10.2026**
(21) Application number: 18839769.9
(22) Date of filing: 13.12.2018
(51) Int. Cl.: C08G 18/10, C09D 175/04, B01J 19/18, B01F 33/82, C08G 18/08, C08G 18/12, C08G 18/32, C08G 18/65, C08G 18/66, C08G 18/75, C08G 18/76, C09J 175/04, B01J 19/00, C08G 18/44

(54) **PROCESS FOR PRODUCING AQUEOUS POLYURETHANE DISPERSIONS IN A CONTINUOUS MANNER**
VERFAHREN ZUR HERSTELLUNG WÄSSRIGER POLYURETHANDISPERSIONEN IN KONTINUIERLICHER WEISE
PROCÉDÉ POUR LA PRÉPARATION DES DISPERSIONS AQUEUSES DE POLYURÉTHANE DE FAÇON CONTINUE

(30) Priority: 15.12.2017 NL 2020093
(43) Date of publication of application: 21.10.2020
(73) Proprietor: Stahl International B.V., 5145 PE Waalwijk (NL)
(72) Inventor: VAN DER WAAL, Jan Jacob Cornelis, 5145 PE Waalwijk (NL); BOGERS, Josephus Adriaan, 5145 PE Waalwijk (NL); VAN DER WERF, Leonore, 5145 PE Waalwijk (NL)
(74) Representative: V.O.
(86) International application number: PCT/NL2018/050839
(87) International publication number: WO 2019/117721

(56) References cited:
- WO-A1-00/49062
- GB-A- 1 432 112
- NL-A- 7 403 183
- US-A- 4 742 095
- US-A- 5 576 382
- KEYVANI M: "IMPROVED POLYURETHANE DISPERSION STABILITY VIA CONTINUOUS PROCESS", ADVANCES IN POLYMER TECHNOLOGY, WILEY AND SONS, HOBOKEN, NJ, US, vol. 22, no. 3, 21 September 2003 (2003-09-21), pages 218 - 224, XP001238806, ISSN: 0730-6679, DOI: 10.1002/ADV.10050
- JUSSI TAMMINEN ET AL: "Mixing performance comparison of milliscale continuous high-shear mixers", CANADIAN JOURNAL OF CHEMICAL ENGINEERING, vol. 93, no. 12, 7 October 2015 (2015-10-07), US, CA, pages 2245 - 2252, XP055503607, ISSN: 0008-4034, DOI: 10.1002/cjce.22327
- CHRISTINE BANASZEK: "High-Speed Mixers for Coatings and Inks", PCI MAGAZINE, 1 February 2015 (2015-02-01), XP055603219, Retrieved from the Internet <URL:https://www.pcimag.com/articles/100125-high-speed-mixers-for-coatings-and-inks> [retrieved on 20190708]

## Description

This invention relates to a method of producing aqueous polyurethane dispersions in a continuous manner.

Current industrial processes for producing aqueous polyurethane dispersions are generally batch wise. That is, in industrial processes either a polyurethane prepolymer is added to a water phase or a water phase is added to such a prepolymer.

Being a batch process, the batch size of the process in which the prepolymer is added to the water phase is limited by the size of the reactor in which the prepolymer is synthesized and by the size of the tank in which the dispersion is made, but there is also a minimum batch size, because the loading level in the dispersion tank should be large enough to allow efficient stirring or mixing. These processes go with a partial or side reaction of isocyanate-function of the prepolymer with water, in the usual case where the extension agent is not present in the water phase from the beginning of the dispersion step, because the dispersing step requires time.

The batch size of the process in which the water phase is added to the prepolymer is also limited by the size of the reactor in which the prepolymer is synthesized and in which the dispersion is made, but there is also a minimum batch size, because the loading level should be large enough to allow efficient stirring or mixing. Also, this process is accompanied by a partial reaction of isocyanate-function of the prepolymer with water, because the dispersing step requires time.

These batch size limitations are inconvenient when aqueous polyurethane dispersions are synthesized on industrial scale. And a fluctuation in the partial reaction of isocyanate-function of the prepolymer with water, which depends on time and thus also on batch size, is not desired because it gives fluctuations in product properties.

Aqueous polyurethane dispersions prepared in a continuous process are described in some prior art references.

NL 7403183 describes a semi-continuous process for the production of aqueous polyurethane dispersions, in which the prepolymer, water phase and the extension agent are separately introduced in a homogenization unit, where the components are mixed turbulently to form an emulsion. This emulsion is transferred to a reaction kettle wherein it is stirred for 15 minutes at 90°C and cooled. The obtained aqueous polyurethane dispersions are apparently instable as the working examples described in this document show phase separation, and the concentrated phase is subsequently used to dry into solid polyurethane powder.

NL 7316880 describes a continuous process for the production of aqueous polyurethane dispersions, in which the stirrer consists of discs with holes therein and the mixing chamber is of a special type that determines the residence time, the particle size and the particle size distribution, wherein these parameters also influence each other, which is undesirable when implantation on industrial scale is desired and wherein gravity plays a role to obtain the desired flow. Particularly, a prepolymer and extension agent solution are introduced at the bottom of a vertically arranged mixing reactor, and water is introduced from the top.

EP 0 232 778 teaches a continuous process for the production of aqueous polyurethane dispersions, in which rotor-stator type mixing is employed, wherein immediately after the preparation of the dispersion the solvent is removed by distillation.

EP 2 094 756 describes a method for producing a high-solid content polyurethane dispersion including the steps of providing a first stream comprising a first polyurethane prepolymer or prepolymer emulsion; providing a second stream being a media phase selected from the group consisting of a second polyurethane prepolymer or prepolymer emulsion or prepolymer dispersion, a seed latex emulsion or combinations thereof; continuously merging said first and second stream in the presence of a chain extender; and forming a polyurethane dispersion having a solid content of at least 60 wt % of the solid and a viscosity of less than 5000 mPa.s at 20°C.

US 4,742,095 describes a continuous process for the production of aqueous polyurethane dispersions, in which a low shear rotor-stator dynamic mixer is used to mix an emulsifiable isocyanate-terminated prepolymer with an aqueous medium; followed by reacting the so obtained prepolymer with a polyamine chain extender.

EP 0 505 871 teaches to disperse polyisocyanates in water using a static mixer. The aim of this step is to increase the pot life by encapsulation of the dispersed polyisocyanates.

WO 2017/009161 describes a continuous process for the production of an aqueous polyurethane dispersion, comprising the steps of simultaneously introducing a prepolymer and a chain-extending reagent in a mixing element; simultaneously introducing the chain-extended prepolymer formed and water in a second mixing element; and subsequently simultaneously introducing said second mixture and water in a third mixing element. Preferably, the three mixing elements are static mixers.

In EP 0 303 907, a continuous process for the production of aqueous polyurethane dispersions is described, wherein a concurrent nozzle is employed. This means that one of the phases needs to be pressurized to 20 to 500 bar to be able to apply the nozzle.

EP 1 169 368 describes continuous processes for the production of aqueous polyurethane dispersions, in which both rotor-stator type mixing and static mixing is combined.

M. Keyvani describes in "Advances in Polymer Technology", Vol. 22(3), pages 218 to 224 a continuous process for producing waterborne polyurethane dispersions. The various process steps involve first the reaction of isocyanate and polyol to make a prepolymer. Once the isocyanate-terminated prepolymer is synthesized trimethylamine is added to neutralise the carboxylic acid group associated with dimethylol propionic acid; the mixing takes place in a static mixer. The neutralized prepolymer, water and chain extender are then mixed in a rotor/stator Oakes Mixer and the resulting product is subsequently stored in a storage tank.

The continuous processes of the prior art to prepare aqueous polyurethane dispersions use rotor-stator mixers. Rotor-stator mixers are high shear mixers of a specific type. Rotor-stator mixers are single-shaft mixers with an impeller rotating in close proximity to a stationary housing referred to as the stator. The stator creates a close-clearance gap between the rotor and itself and forms an extremely high-shear zone for the material as it exits the rotor. Reynolds numbers are usually in the range 26000 to 52000. Further descriptions of rotor stator mixers can be found in "Handbook of Industrial Mixing, Science and Practice", ed. By Edward L. Paul, Victor A. Atiemo-Obeng and Suzanne M. Kresta, Wiley-Interscience, 2004, in particular in Chapter 8 thereof.

The limitation of such a rotor-stator mixer is that it can only handle low viscosity liquids, as the liquids need to be squeezed through the small gaps between the teeth of set-up. A viscosity of 5000 mPa.s is a typical upper limit for the liquids that can be used in a rotor-stator system, as evidenced by the 5000 mPa.s limit mentioned for rotor-stator systems from IKA, e.g. the IKA Dispax Reactor series. Thus it is not possible to mix a high viscosity polyurethane prepolymer with water using such a rotor-stator mixer. A further limitation is the very high shear forces which are exhibited on the liquid in such a mixer; not all aqueous polyurethane dispersions have enough mechanical stability to survive such high shear forces.

It is an aim of the present invention to provide in a continuous process aqueous polyurethane dispersions with flexibility in batch sizes, in which process the reaction of the isocyanate function with water is reduced and which provides a more consistent product. This product can be stored before further processing. It is a further aim of the present invention to provide polyurethane dispersions, also of a high viscosity prepolymer without using mixers of the rotor-stator type.

This aim is reached by the process of the present invention, wherein in a continuous manner a polyurethane prepolymer and a water phase are being continuously fed into a mixing chamber in which high shear mixers not of the rotor-stator type are mixing the two phases under turbulent regime, and wherein the aqueous polyurethane dispersion is obtained directly after the outflow from the mixing chamber, wherein an extension agent is either fed to the water phase prior to the mixing step, or fed directly into the mixing chamber via a separate inlet or fed to the outflow of the aqueous polyurethane dispersion after the mixing chamber, or a combination of any of these. The outflow from the mixing chamber can be collected directly in a tank, which is preferably equipped with a stirring facility, but the outflow can also optionally first go through a static mixer before collection in a tank.

A major advantage is that the process of the present invention provides improved flexibility in batch sizes, as there is only a limitation on batch size concerning the reactor in which the prepolymer is synthesized. Further, the partly reaction of isocyanate-function of the prepolymer with water is considerably reduced, and this results in a more consistent product. An additional advantage of the process of the present invention is that the mixing is very efficient which results in a lower need for a neutralization agent that is admixed to either the prepolymer phase or the water phase, e.g. whereas for a batch process the neutralization degree, based on molar equivalents, is usually in a range between 0.8 to 1.1, this range is typically between 0.7 and 0.9 for the process of the present invention when the same aqueous polyurethane dispersion is made, which results in a lower amount of neutralization agent in the product and because neutralization agents are preferably volatile amines this results in a lower content of volatile organic compounds (VOC), which is beneficial as there is a constant drive to decrease the amount of VOC that is being released upon usage of the aqueous polyurethane dispersions. Further the process of the present invention allows to produce polyurethane dispersions also from high viscosity prepolymers.

According to the present invention there is provided a process of producing aqueous polyurethane dispersions in a continuous manner, in which a polyurethane prepolymer and a water phase are being continuously fed into a mixing chamber in which a high shear mixer not of the rotor-stator type is mixing the two phases under turbulent regime. The turbulent regime is such that the Reynolds number is at least 4000, preferably at least 4500, and more preferably at least 5000. Generally the Reynolds number is lower than 15000 or up to 12000 or up to 10000. In this step, the two components that need to be mixed but do not dissolve easily into each other, the prepolymer and the water phases, are forced into a small mixing chamber and the flow in the mixing chamber is such that in different areas of the mixing chamber different flow velocities occur. Thereby, the fluid streams undergo shear on the interphases of the different flow areas. In a preferred embodiment, this turbulent mixing behaviour is created by using a rotating impeller or a series of such impellers in the mixing chamber. For this embodiment, the tip velocity (that is, the speed of the fluid at the outside diameter of the impeller) is higher than the velocity at the center of the rotor, and this velocity difference creates high shear. The mixing chamber is preferably box-like shaped or rectangular in shape. The extension agent can be fed to the water phase prior to the mixing step, or can be fed directly into the mixing chamber via a separate feed line or can be fed to the outflow of the aqueous polyurethane dispersion after the mixing chamber. If the extension agent is already added to the water phase prior to the mixing chamber, or if the extension agent is added separately in the mixing chamber, the polyurethane dispersion is already finished when leaving the mixing chamber. If the extension agent is added downstream the mixing chamber, then it is preferred to let the stream pass a static mixer, before it is stored in a collection tank to ensure that the components get into contact with each other and that the extension agent reacts with the prepolymer.

Because of the turbulent regime in the mixing chamber, the obtained polyurethane dispersion is storage stable at room temperature and does not show phase separation for at least 4 weeks and generally even at least 2 months and in preferred embodiments even at least 4 months. That is, after leaving the mixing chamber, the formed dispersion - after perhaps some minutes to terminate the reaction between the reactants present - is a stable, effectively finished product.

It goes without saying that this stable product can at will be used as intermediate, or sold as a final end product.

It is an essential step of the process according to the present invention that a prepolymer is used. Suitable prepolymers may be made using isocyanate components. These isocyanates are reacted with polyols. Preferred prepolymers may be made with aliphatic di-isocyanates, aromatic di-isocyanates, or a mixture of aromatic and aliphatic di-isocyanates, such as toluene-2,4-diisocyanate, toluene-2,6-diisocyanate and mixtures thereof, diphenylmethane-4,4-diisocyanate, 1,4-phenylenediisocyanate, dicyclohexylmethane-4,4'-diisocyanate, 3-isocyanatomethyl-3,5,5-trimethylcyclo-hexylisocyanate, 1,6-hexyldi-isocyanate, 1,5-pentyldiisocyanate, 1,3-bis(isocyanatomethyl)cyclohexane, 2,2,4-trimethyl-1,6-diisocyanatohexane (2,2,4-isomer, 2,4,4-isomer, or mixture thereof), 1,4-cyclohexyldiisocyanate, norbonyldiisocyanate, p-xylylene diisocyanate, 2,4'-diphenylmethane diisocyanate, and/or 1,5-naphthylene diisocyanate. Mixtures of polyisocyanates can be used and also polyisocyanates which have been modified by the introduction of urethane, allophanate, urea, biuret, carbodiimide, uretonimine or isocyanurate residues.

Polymeric polyols having molecular weights in the range of 500 to 6000 which may be used in the preparation of the prepolymer particularly include diols and triols and mixtures thereof but higher functionality polyols may be used as well, for example as minor components in admixture with diols. The polyols may be members of any of the chemical classes of polymeric polyols used or proposed to be used in polyurethane formulations. Preferred polyols are selected from the group of polyester polyols, polyesteramide polyols, polyether polyols, polythioether polyols, polycarbonate polyols, polyacetal polyols, polyolefin polyols or polysiloxane polyols or mixtures thereof. Preferred polyol molecular weights are from 700 to 4000. Polyols having molecular weights below 500 which may optionally be used in the preparation of the prepolymer particularly include diols and triols and mixtures thereof but higher functionality polyols may be used. Examples of such lower molecular weight polyols include ethylene glycol, diethylene glycol, triethylene glycol, tetraethylene glycol, bis (hydroxyethyl) terephthalate, neopentylglycol, trimethylol propane, cyclohexane dimethanol, furan dimethanol, glycerol and the reaction products, up to molecular weight 499, of such polyols with propylene oxide and/or ethylene oxide.

Dispersibility of the polyurethanes in water can be achieved by incorporating hydrophilic groups into the prepolymer. For this reason other polyols may be present during the prepolymer formation such as a polyethoxy diol, a poly(ethoxy/propoxy) diol, a diol containing a pendant ethoxy or (ethoxy/propoxy) chain, a diol containing a carboxylic acid, a diol containing a sulfonic group, a diol containing a phosphate group, a polyethoxy mono-ol, a poly(ethoxy/propoxy) mono-ol, a mono-ol containing a pendant ethoxy or (ethoxy/propoxy) chain, a mono-ol containing a carboxylic acid or a sulfonic acid or salt, or mixtures thereof. A diol containing a carboxylic acid include carboxyl group containing diols and triols, for example dihydroxy alkanoic acids of the formula: R-C-(CH₂-OH)₂-COOH wherein R is hydrogen or alkyl. Examples of such carboxyl containing diols are 2,2-dimethylolpropionic acid and 2,2-dimethylolbutanoic acid. Other useful acid group containing compounds include amino carboxylic acids, for example lysine, cysteine and 3,5-diaminobenzoic acid and sulfonic acids, for example 4,6-diaminobenzene-1,3-disulphonic acid.

The carboxylic acid functions are generally neutralized with a volatile tertiary amine neutralizing agent before or during dispersion of the polyurethane prepolymer into water; yet other known neutralizing agents can be used as well. Both the polyurethane and the tertiary amine functional urethane polymer or oligomer or dispersion thereof may contain additional functional groups with the objective to improve the waterdispersibility, to improve adhesion to substrates during application, for performance reasons, or as potential sites for crosslinking. Suitable functions are polyalkoxy functions with a large concentration of ethoxy functions, tertiary amine or quaternary amine functions, perfluoro functions, incorporated silicon functions, hydrazide functions or hydrazone functions, ketone, acetoacetate, or aldehyde functions, or mixtures thereof.

The conversion of any acid groups present in the prepolymer to anionic groups may be effected by neutralising the said acidic groups before, after or simultaneously with formation of the aqueous dispersion. Suitable neutralising agents include tertiary amines such as tripropylamine, dimethyl butyl amine, dimethyl ethanol amine, diethyl ethanol amine, triethylamine, 2-amino-2-methyl-1-propanol and N-ethylmorpholine.

The prepolymer may contain between 0% and 35% co-solvents to achieve a low(er) viscosity, but preferably the prepolymer does not contain a co-solvent. If used, suitable co-solvents are N-ethyl pyrrolidine, acetone, 2-butanone, 2,2'-ethylenedioxydiethyl bis(2-ethylhexanoate) and dipropylene glycol dimethyl ether. Not only are these co-solvents used to reduce the viscosity of the prepolymer, but also do these allow for a more convenient handling during the dispersion step.

Polyurethane prepolymers useful in the practice of the present invention may be prepared in a conventional manner by reacting a stoichiometric excess of the organic polyisocyanate with the polymeric polyol having a molecular weight in the range 500 to 6000 and the other required isocyanate-reactive compounds under substantially anhydrous conditions at a temperature between about 30°C and about 130°C until reaction between the isocyanate groups and the hydroxyl groups is substantially complete. The polyisocyanate and the active hydrogen containing components are suitably reacted in such proportions that the ratio of number of isocyanate groups to the number of hydroxyl groups is in the range from about 1.1:1 to about 6:1, preferably within the range of from 1.5:1 to 3:1. If desired, catalysts, such as bismuth carboxylate, zinc carboxylate, dibutyltin dilaurate, aluminium chelate, zirconium chelate, stannous octoate or triethylenediamine, may be used to assist prepolymer formation.

Prepolymers useful in the practice of the present invention should be substantially liquid under the conditions of the dispersing step, which means that these prepolymers should have a viscosity below 100,000 mPa.s at a temperature of 90°C, measured using a Brookfield LVF Viscometer. The process of the present invention can handle prepolymers of low as well as high viscosity (up to 100000 mPa.s). The present process can handle prepolymers having a viscosity in the range of 500 mPa.s to 100000 mPa.s, preferably in the range of 1000 mPa.s to 50000 mPa.s, more preferably in the range of 1500 mPa.s to 25000 mPa.s, at the temperature at which the prepolymer is used in the process. Contrary to the prior art continuous processes to prepare polyurethane dispersions using rotor-stator mixers the present process can also handle high viscosity prepolymers having a viscosity of more than 5000 mPa.s or even more than 6000 mPa.s or 7500 mPa.s or 10000 mPa.s, at the temperature at which the prepolymer is used in the process.

The present invention includes generally an extension agent, which is used to build the molecular weight of the polyurethane prepolymer by reacting the extension agent with the isocyanates functionality of the polyurethane prepolymer. The active hydrogen containing extension agent which is reacted with the prepolymer is suitably a polyol, an amino alcohol, ammonia, a primary or secondary aliphatic, alicyclic, aromatic, araliphatic or heterocyclic amine especially a diamine, hydrazine or a substituted hydrazine. Water-soluble extension agents are preferred, and water itself may be effective. Examples of suitable extension agents useful herein include ethylene diamine, diethylene triamine, triethylene tetramine, propylene diamine, butylene diamine, hexamethylene diamine, cyclohexylene diamine, piperazine, 2-methyl piperazine, phenylene diamine, bis(3-aminopropylamine), sodium 2-[(2-aminoethyl)amino]ethane-sulfonate, tolylene diamine, xylylene diamine, tris (2-aminoethyl) amine, 3,3'-dinitrobenzidine, 4,4'methylenebis (2-chloraniline), 3,3'-dichloro-4,4'biphenyl diamine, 2,6-diaminopyridine, 4,4'-diaminodiphenylmethane, menthane diamine, m-xylene diamine, 5-amino-1,3,3-trimethyl-cyclohexanemethyl-amine, amine terminated polyethers such as, for example, Jeffamine D-230 from Huntsman Chemical Company, and adducts of diethylene triamine with acrylate or its hydrolyzed products. Also suitable are materials such as hydrazine, azines such as acetone azine, substituted hydrazines such as, for example, dimethyl hydrazine, 1,6-hexamethylene-bis-hydrazine, carbodihydrazine, hydrazides of dicarboxylic acids and sulfonic acids, adipic acid mono- or dihydrazide, oxalic acid dihydrazide, isophthalic acid dihydrazide, tartaric acid dihydrazide, 1,3-phenylene disulfonic acid dihydrazide, omega-amino-caproic acid dihydrazide, hydrazides made by reacting lactones with hydrazine such as gamma-hydroxylbutyric hydrazide, bis-semi-carbazide, bis-hydrazide carbonic esters of glycols such as any of the glycols mentioned above. The amount of extension agent employed should be approximately equivalent to the free-NCO groups in the prepolymer, the ratio of active hydrogens in the chain extender to NCO groups in the prepolymer preferably being in the range from 0.7:1 to 2.0:1. Of course when water is employed as the extension agent, these ratios will not be applicable since the water, functioning both as extension agent and dispersing medium, will be present in a gross excess relative to the free-NCO groups.

While polyurethane prepolymers may retain some isocyanate reactivity for some period of time after dispersion, for purposes of the present invention, a polyurethane prepolymer dispersion is considered to be a fully reacted polyurethane polymer dispersion. Also, for purposes of the present invention, a polyurethane prepolymer or polyurethane polymer can include other types of structures such as, for example, urea groups.

The aqueous polyurethane dispersion comprises at least 25 wt%, preferably at least 30 wt%, more preferably at least 40 wt% of polyurethane polymer particles based on total mass of the dispersion. As conventionally done by the skilled person, the weight percentage is calculated beforehand, taking into account which components evaporate and which components do not evaporate. The solids percentage is at a later stage measured to confirm; thereto, a small amount is weighted, then put in an oven at 105°C during one hour and the remaining amount is measured. In this control step, a higher or longer temperature/time regime can be chosen as well, if there are slowly evaporating components present.

If desired, amounts of emulsifiers, defoamers, flame retardants, thickeners, stabilizers, anti-oxidants and/or anti-settling agents may be included in the prepolymer or the water phase, or may be added to the aqueous polyurethane dispersion.

The prepolymer prepared and a water phase are being continuously fed into a mixing chamber in which a high shear mixer not of the rotor-stator type, that may contain more than one mixing element, is mixing the phases under turbulent regime and the aqueous polyurethane dispersion is obtained directly after the outflow from the mixing chamber, wherein the extension agent, if the extension agent is different from water, can be fed to the water phase prior to the mixing step, or can be fed directly into the mixing chamber via a separate inlet or can be fed to the outflow of the aqueous polyurethane dispersion after the mixing chamber. Optionally, an additional phase can be fed to the water phase prior to the mixing step or can be fed to the outflow of the aqueous polyurethane dispersion after the mixing chamber, where the additional phase may comprise undiluted or with water or solvent diluted amines, undiluted or with water or solvent diluted neutralization agents, undiluted or with water diluted solvents or undiluted or with water or solvent diluted additives, like emulsifiers, defoamers, flame retardants, thickeners, stabilizers, anti-oxidants and/or anti-settling agents.

The flow of the prepolymer phase and the flow of the water phase are chosen such that the average residence time in the mixing chamber is between 2 and 60 seconds, preferably between 4 and 30 seconds and most preferably between 5 and 20 seconds. The flow of the prepolymer phase and the flow of the water phase are related to each other such that the ratio of these two flows will determine the solids content of the resulting aqueous polyurethane dispersion, when also the solids content of both the prepolymer phase and the water phase is taken into account. The ratio is thus chosen such that the desired solids content of the aqueous polyurethane dispersion is obtained. In the execution of the process it is preferred that the flow of the water phase starts a little earlier than the flow of the prepolymer phase and the flow of the extension agent and it is also preferred that the flow of the water phase ends a little later than the flow of the prepolymer phase and the flow of the extension agent so that both at the start of the process and at the end of the process only the water phase will go through the mixing chamber.

The outflow from the mixing chamber can be collected directly in a tank, which is preferably equipped with a stirring facility, but the outflow can also optionally first go through a static mixer before collecting in a tank.

The normal situation will be that the collecting tank has a sufficiently large volume to collect the total amount of the aqueous polyurethane dispersion that is made according to the process of the invention, but it can also be that two or more collecting tanks are connected to the outflow of the mixing chamber to collect the aqueous polyurethane dispersion in two or more collecting tanks.

The temperature of the prepolymer phase is chosen such that the viscosity allows for convenient pumping and flow at the chosen temperature, which may be between 10°C and 100°C, preferably between 20°C and 80°C and most preferably between 30°C and 70°C. The temperature of the water phase can be between 0°C and 70°C, preferably between 5°C and 60°C and most preferably between 10°C and 50°C.

As said, the polyurethane dispersion may contain co-solvents, such as between 0% and 20% co-solvents, for instance as weight/weight %. Preferably, the polyurethane dispersion is essentially free of co-solvents. Accordingly, the dispersion comprises preferably less than 15 wt%, such as 0 to 10 wt%, or 0 to 5.0 wt%, or 0 to 1.0 wt% of organic liquid components (for instance liquid at 20°C and 1 bar), based on total mass of the dispersion.

The viscosity of the aqueous polyurethane dispersion of the invention is generally lower than 1000 mPa.s, preferably lower than 750, more preferably lower than 500, and most preferably lower than 250 mPa.s, as measured at 25°C using a Brookfield LVF Viscometer.

The advantages of the present invention are an improved flexibility in batch sizes, as only a limitation on batch size remains concerning the reactor in which the prepolymer is synthesized and the fact that the partial reaction of isocyanate-functions of the prepolymer with water is much smaller, which results in a more consistent product. An additional advantage of the process of the present invention is that the mixing is very efficient which results in a lower need for the neutralization agent that is admixed to either the prepolymer phase or the water phase, which results in a lower amount of neutralization agent in the product and because neutralization agents are preferably volatile amines this results in a lower content of volatile organic compounds (VOC), which is beneficial as there is a constant drive to decrease the amount of VOC that is being released upon usage of the aqueous polyurethane dispersions. Further also prepolymers of high viscosity can be handled in the process of the present invention.

In a second aspect, the present disclosure relates to an apparatus.

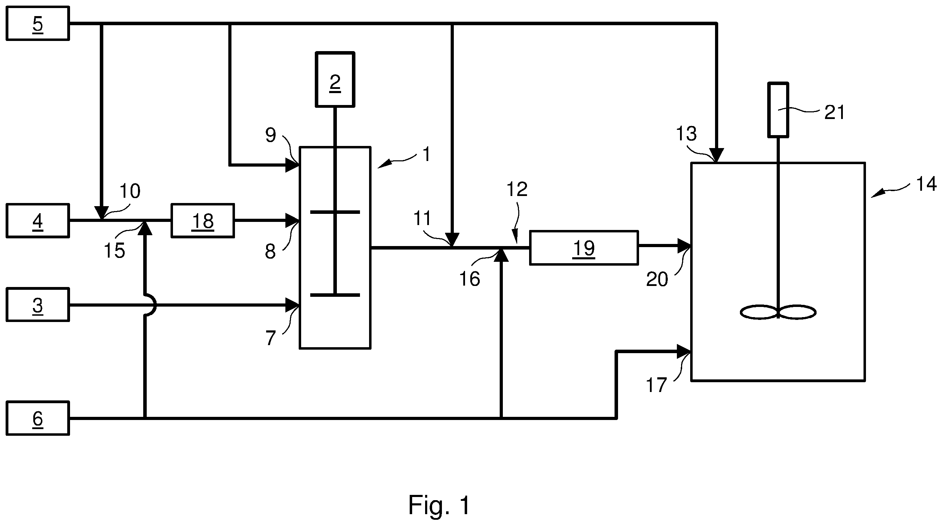

This second aspect will be elaborated under reference to the figure. This reference is not limiting. More specifically, Figure 1 shows a schematic layout of an apparatus for the process according to the present invention.

In the second aspect, the present disclosure relates to an apparatus suitable for continuously producing aqueous polyurethanes dispersions, comprising
a. a mixing chamber, arranged horizontally or vertically, having a cylindrical shape, preferably with baffles, or having an elliptical shape, preferably with baffles, or having a rectangular shape, optionally with baffles, or having a convex polygonal shape, optionally with baffles; and
b. a mixing device not of the rotor-stator type, inside the mixing chamber in a central position or in an eccentric position, that can create a turbulent mixing regime, which mixing device can preferably be comprised of one or more axes equipped with one or more propeller blades, ribbon blades, cowless blades, turbine blades, curves blade paddles, flat blade turbine, open blades, paddles blades, spiral propeller blades, radial flow blades, toothed discs or turbine vortex blades, or a combination thereof; and
c. a first inlet, a second inlet and optionally a third inlet into the mixing chamber, said inlets being arranged such that liquids from the inlets can be introduced simultaneously into the mixing chamber; and
d. at least one collection tank arranged with stirring means; and
e. optionally a static mixer arranged between the mixing chamber and the collection tank or collection tanks such that the outflow from the mixing chamber passes the static mixer. The apparatus may further comprise
f. optionally one or two inlets into the flow of the water phase and/or one or two inlets into the outflow from the mixing chamber before an optional static mixer and/or one or two inlets into the receiving tank, through which inlets extension agent and/or additives can be fed.

While referring to Figure 1, the prepolymer phase is dosed from source 3 via first inlet 7 into the mixing chamber 1 that is equipped with a turbulent stirring unit 2. The water phase is dosed from source 4 via second inlet 8 into the mixing chamber 1. The extension agent is dosed from source 5 via third inlet 9 into the mixing chamber 1 and/or via inlet 10 into the flow of the water phase and/or via inlet 11 into the outflow 12 after the mixing chamber 1 or via inlet 13 into the receiving or collecting tank 13. Optional other additives are dosed from source 6 via inlet 15 into the flow of the water phase and/or via inlet 16 into the outflow 12 after the mixing chamber 1 and/or via inlet 17 into the receiving tank 14. The flow of the water phase can go through an optional static mixer 18 prior to the inlet 8 into the mixing chamber 1. The outflow 12 after the mixing chamber 1 can go through an optional static mixer 19 before it enters receiving tank 14 at inlet 20. The receiving tank 14 is equipped with a stirring unit 21.

In a preferred embodiment, first inlet 7 is designed for the supply of at least one prepolymer phase and the second inlet 8 is designed for the supply of at least one water phase. The optional third inlet 9 is designed for at least one extension agent. If desired the first, second and third inlets (7, 8, 9) may each be multiple inlets. In a preferred embodiment, the inlets are connected to reservoir vessels (3, 4, 5) suitable for accommodating the liquid to be introduced by the respective feed. If more than one feed is used for the introduction of the same liquids via more than one inlets (7, 8, 9), then it is preferable to connect said feeds to a single reservoir vessel (3, 4, 5).

The dosing of the liquid through the inlets can be effected in any manner known to those skilled in the art. Preference is given to the use of one or more pumps. Possible is also dosing by virtue of gravity, in that the reservoir (3, 4, 5) is mounted higher than the inlet (7, 8, 9). Dosing via elevated pressure is another dosing method in accordance with the invention. Feeds used for liquids may be any device known to those skilled in the art, preferably pipes or hoses. The dimensions of the feeds have to be such that these yield, given a flow rate achievable by the dosing method chosen, a volume flow rate that meets the requirements of the process according to the invention.

In a third aspect, the present disclosure relates to the product obtainable by or produced according to the process of the invention. This product is a storage stable polyurethane dispersion.

The above described specific embodiments are all embodiments in accordance with the present invention. The various embodiments may be mutually combined. A feature described for one particular embodiment maybe taken up, incorporated in or otherwise combined with other particular embodiments unless the laws of physics would forbid such combinations.

The present invention will be further elaborated by the following non-limiting working examples. Parts and percentages of components referred to in these working examples are drawn to the weight of the total composition wherein these components are present, like in the other parts of the description and claims, unless otherwise indicated.

### EXAMPLES

### Example 1

Under a nitrogen atmosphere 365 g of a polypropylene diol with a molecular weight of 2000, 300 g of a polypropylene diol with a molecular weight of 1000, 40 g of neopentylglycol and 15 g of dimethylolpropanoic acid were heated to 50°C while stirring. 280 g of toluene-di-isocyanate was added and the mixture was heated to 85°C and stirred for 1 hour to form a polyurethane prepolymer. Then 0.05 g of K-Kat 348 (from King Industries) as catalyst was added and the mixture was stirred for another hour at 85°C. The reaction was cooled down and the amount of remaining NCO was measured.

### Example 2

Under a nitrogen atmosphere 347 g of a polypropylene diol with a molecular weight of 2000, 200 g of a polypropylene diol with a molecular weight of 1000 and 27 g of dimethylolpropanoic acid were heated to 70°C while stirring. 225 g of 3-isocyanatomethyl-3,5,5-trimethylcyclo-hexylisocyanate together with 0.05 g of K-Kat 348 (from King Industries) as catalyst was added and the mixture was heated to 95°C and stirred for 2 hours to form a polyurethane prepolymer. The reaction was cooled down and the amount of remaining NCO was measured. The viscosity of the obtained prepolymer was 9600 mPa.s, as measured at 50°C using a Brookfield DVII+ Pro Viscometer and a Thermosel temperature control unit, using spindle SC4-27.

### Example 3

Under a nitrogen atmosphere 450 g of a polycarbonate diol based on hexanediol with a molecular weight of 2000, 160 g of dipropylene glycol dimethyl ether and 23 g of dimethylolpropanoic acid were heated to 70°C while stirring. 165 g of dicyclohexyl-methane-4,4'-diisocyanate together with 0.05 g of K-Kat 348 (from King Industries) as catalyst was added and the mixture was heated to 95°C and stirred for 2 hours to form a polyurethane prepolymer. The reaction was cooled down and the amount of remaining NCO was measured. The viscosity of the obtained prepolymer was 10000 mPa.s, as measured at 70°C using a Brookfield DVII+ Pro Viscometer and a Thermosel temperature control unit, using spingle SC4-27.

### Example 4

227.5 kg of the polyurethane prepolymer of Example 1, with a temperature of 50°C, was pumped into the mixing chamber with a flow of 7 kg/minute while simultaneously the water phase consisting of 151 kg of water, 7 kg of Genapol X150 (from Clariant), 5 kg of SMA1440HD (from Cray Valley) and 2.2 kg of diethylethanolamine was pumped into the mixing chamber, that has a volume of 2 litres, with a flow of 5 kg/minute. An amount of 7 kg of hydrazine hydrate was dosed to the flow of the water phase, at a point before the mixing chamber, with a flow of 0.22 kg/min. The 400 kg aqueous polyurethane dispersion was obtained within 35 minutes dispersing. The solids content of the dispersion was 60%. The viscosity of the dispersion was 160 mPa.s, as measured at 25°C using a Brookfield LVF Viscometer.

### Example 5

3933 kg of the polyurethane prepolymer of Example 2, with a temperature of 60°C, was mixed with 86 kg trimethylamine for about 30 minutes and then pumped into the mixing chamber with a flow of 70 kg/minute while simultaneously the water phase consisting of 5876 kg of water was pumped into the mixing chamber, that has a volume of 20 litres, with a flow of 100 kg/minute. An amount 105 kg of hydrazine hydrate was dosed to the flow of the water phase, at a point before the mixing chamber, with a flow of 1.8 kg/min. The 10000 kg aqueous polyurethane dispersion was obtained within 60 minutes dispersing. The solids content of the dispersion was 40%. The viscosity of the dispersion was 240 mPa.s, as measured at 25°C using a Brookfield LVF Viscometer.

### Example 6

4056 kg of the polyurethane prepolymer of Example 3, with a temperature of 70°C, was mixed with 66 kg trimethylamine for about 30 minutes and then pumped into the mixing chamber with a flow of 80 kg/minute while simultaneously a water phase consisting of 5768 kg of water, 5 kg diethyl ethanol amine and 40 kg of Aerosol OT-75 (from Cytec Industries) was pumped into the mixing chamber, that has a volume of 20 litres, with a flow of 110 kg/minute. An amount of 65 kg of hydrazine hydrate was dosed to the outflow from the mixing chamber, with a flow of 1.24 kg/min, at a point before the static mixer. The 10000 kg aqueous polyurethane dispersion was obtained within 55 minutes dispersing. The solids content of the dispersion was 30%. The viscosity of the dispersion was 25 mPa.s, as measured at 25°C using a Brookfield LVF Viscometer.

## Claims

1. A continuous process for the preparation of an aqueous polyurethane dispersion using an extension agent **characterized in that** a polyurethane prepolymer phase and a water phase are being continuously fed into a mixing chamber in which a high shear mixer is not of the rotor-stator type and mixing the two phases under turbulent regime and wherein the turbulent regime is created by using a rotating impeller or a series of such impellers in the mixing chamber and wherein tip velocity is higher than the velocity at the centre and this velocity difference creates high shear such that the Reynolds number is within the range 4000 to 15000 and that the aqueous polyurethane dispersion is obtained directly after the outflow from the mixing chamber,
wherein the extension agent can be fed to the water phase prior to the mixing step, or can be fed directly into the mixing chamber via a separate inlet or can be fed to the aqueous polyurethane dispersion after the mixing chamber and
wherein optionally other additives can be fed to the water phase prior to the mixing step, or can be fed to the aqueous polyurethane dispersion after the mixing chamber, and
wherein the polyurethane dispersion obtained is collected in a storage tank and,
wherein the polyurethane prepolymer has a viscosity in the range of 500 mPa.s to 100000 mPa.s, preferably in the range of 1000 mPa.s to 50000 mPa.s, most preferably in the range of 1500 mPa.s to 25000 mPa.s, measured using a Brookfield LVF Viscometer at the temperature at which the polyurethane prepolymer is used in the process.

2. The process of claim 1, wherein the outflow from the mixing chamber passes a static mixer after leaving the mixing chamber.

3. The process of claim 1 or claim 2, wherein the aqueous polyurethane dispersions comprises at least 25 wt%, preferably at least 30 wt%, more preferably at least 40 wt% of polyurethane polymer particles based on total mass of the dispersion.

4. The process of any one of claims 1 to 3, wherein the aqueous polyurethane dispersions comprises less than 15 wt%, preferably between 0 wt% and 10 wt% and more preferably between 0 wt% and 5 wt% organic liquid components, based on total mass of dispersion.

5. The process of any one of claims 1 to 4, wherein the flow of the prepolymer phase and the flow of the water phase are chosen such that the average residence time in the mixing chamber is between 2 and 60 seconds, preferably between 4 and 30 seconds and most preferably between 5 and 20 seconds.

6. The process of any one of claims 1 to 5, wherein the temperature of the prepolymer phase is between 10°C and 100°C, preferably between 20°C and 80°C and most preferably between 30°C and 70°C and the temperature of the water phase is between 0°C and 70°C, preferably between 5°C and 60°C and most preferably between 10°C and 50°C.

7. The process of any one of claims 1 to 6, wherein the storage tank in which the aqueous polyurethane dispersion is collected is one or more tanks, and/or is equipped with a stirring device.

## Patentansprüche

1. Kontinuierliches Verfahren zur Herstellung einer wässrigen Polyurethandispersion unter Verwendung eines Verlängerungsmittels, **dadurch gekennzeichnet, dass** eine Polyurethan-Prepolymerphase und eine Wasserphase kontinuierlich in eine Mischkammer eingeleitet werden, in der ein Hochschermischer, der nicht vom Rotor-Stator-Typ ist, die beiden Phasenunter turbulentem Regime vermischt, und wobei das turbulente Regime unter Verwendung eines rotierenden Rührflügels oder einer Reihe solcher Rührflügel erzeugt wird und wobei die Geschwindigkeit an den Flügelspitzen höher ist als die Geschwindigkeit im Zentrum, und diese Geschwindigkeitsdifferenz hohe Scherung erzeugt, sodass die Reynolds-Zahl innerhalb des Bereichs von 4000 bis 15000 ist, und wobei die wässrige Polyurethandispersion direkt nach dem Ausfluss aus der Mischkammer erhalten wird,
wobei das Verlängerungsmittel der Wasserphase vor dem Mischschritt zugeführt werden kann oder mittels eines separaten Einlasses direkt der Mischkammer zugeführt werden kann oder der wässrigen Polyurethandispersion nach der Mischkammer zugeführt werden kann und
wobei optional andere Additive der Wasserphase vor dem Mischschritt zugeführt werden können oder der wässrigen Polyurethandispersion nach der Mischkammer zugeführt werden können und
wobei die erhaltene Polyurethandispersion in einem Speichertank gesammelt wird, und
wobei das Polyurethan-Prepolymer eine Viskosität im Bereich von 500 mPa ·s bis 100000 mPa ·s hat, vorzugsweise im Bereich von 1000 mPa ·s bis 50000 mPa ·s, am bevorzugtesten im Bereich von 1500 mPa ·s bis 25000 mPa ·s, gemessen unter Verwendung eines Brookfield-LVF-Viskosimeters bei der Temperatur, bei der das Polyurethan-Prepolymer im Verfahren verwendet wird.

2. Verfahren nach Anspruch 1, wobei der Ausfluss aus der Mischkammer nach Verlassen der Mischkammer einen statischen Mischer passiert.

3. Verfahren nach Anspruch 1 oder Anspruch 2, wobei die wässrige Polyurethandispersionen mindestens 25 Gew.-%, vorzugsweise mindestens 30 Gew.-%, bevorzugter mindestens 40 Gew.-% Polyurethanpolymerpartikel bezogen auf die Gesamtmasse der Dispersion umfassen.

4. Verfahren nach einem der Ansprüche 1 bis 3, wobei die wässrigen Polyurethandispersionen weniger als 15 Gew.-%, vorzugsweise zwischen 0 Gew.-% und 10 Gew.-% und bevorzugter zwischen 0 Gew.-% und 5 Gew.-% organische flüssige Komponenten, bezogen auf die Gesamtmasse der Dispersion, umfassen.

5. Verfahren nach einem der Ansprüche 1 bis 4, wobei der Fluss der Prepolymerphase und der Fluss der Wasserphase so gewählt werden, dass die durchschnittliche Verweilzeit in der Mischkammer zwischen 2 und 60 Sekunden, vorzugsweise zwischen 4 und 30 Sekunden und am bevorzugtesten zwischen 5 und 20 Sekunden ist.

6. Verfahren nach einem der Ansprüche 1 bis 5, wobei die Temperatur der Prepolymerphase zwischen 10 °C und 100 °C liegt, vorzugsweise zwischen 20 °C und 80 °C und am bevorzugtesten zwischen 30 °C und 70 °C ist und die Temperatur der Wasserphase zwischen 0 °C und 70 °C, vorzugsweise zwischen 5 °C und 60 °C und am bevorzugtesten zwischen 10 °C und 50 °C ist.

7. Verfahren nach einem der Ansprüche 1 bis 6, wobei der Speichertank, in dem die wässrige Polyurethandispersion gesammelt wird, ein oder mehrere Tanks ist und/oder mit einer Rührvorrichtung ausgestattet ist.

## Revendications

1. Procédé continu de préparation d'une dispersion aqueuse de polyuréthane utilisant un agent d'extension **caractérisé en ce qu'**une phase de prépolymère de polyuréthane et une phase aqueuse sont introduites en continu dans une chambre de mélange dans laquelle un mélangeur à haut cisaillement n'est pas du type rotor-stator et les deux phases sont mélangées en régime turbulent et dans lequel le régime turbulent est créé par l'utilisation d'une turbine rotative ou d'une série de telles turbines dans la chambre de mélange et dans lequel la vitesse en périphérie est supérieure à la vitesse au centre et cette différence de vitesse crée un cisaillement élevé de sorte que le nombre de Reynolds est dans la plage de 4 000 à 15 000 et que la dispersion aqueuse de polyuréthane est obtenue directement après le flux sortant provenant de la chambre de mélange,
dans lequel l'agent d'extension peutt être introduit dans la phase aqueuse avant l'étape de mélange, ou peut être introduit directement dans la chambre de mélange via une entrée séparée ou peut être introduit dans la dispersion aqueuse de polyuréthane après la chambre de mélange et
dans lequel éventuellement d'autres additifs peuvent être introduits dans la phase aqueuse avant l'étape de mélange ou peuvent être introduits dans la dispersion aqueuse de polyuréthane après la chambre de mélange, et
dans lequel la dispersion de polyuréthane obtenue est recueillie dans un réservoir de stockage et
dans lequel le prépolymère de polyuréthane a une viscosité dans la plage de 500 mPa.s à 100 000 mPa.s, de préférence dans la plage de 1 000 mPa.s à 50 000 mPa.s, de manière particulièrement préférable dans la plage de 1 500 mPa.s à 25 000 mPa.s, mesurée à l'aide d'un viscosimètre Brookfield LVF à la température à laquelle le prépolymère de polyuréthane est utilisé dans le procédé.

2. Procédé selon la revendication 1, dans lequel le flux sortant provenant de la chambre de mélange traverse un mélangeur statique après avoir quitté la chambre de mélange.

3. Procédé selon la revendication 1 ou la revendication 2, dans lequel la dispersion aqueuse de polyuréthane comprend au moins 25 % en poids, de préférence au moins 30 % en poids, de préférence encore au moins 40 % en poids de particules de polymère de polyuréthane, sur la base de la masse totale de la dispersion.

4. Procédé selon l'une quelconque des revendications 1 à 3, dans lequel la dispersion aqueuse de polyuréthane comprend moins de 15 % en poids, de préférence entre 0 % en poids et 10 % en poids et de préférence encore entre 0 % en poids et 5 % en poids de composants liquides organiques, sur la base de la masse totale de la dispersion.

5. Procédé selon l'une quelconque des revendications 1 à 4, dans lequel le débit de la phase de prépolymère et le débit de la phase aqueuse sont choisis de telle sorte que le temps de séjour moyen dans la chambre de mélange est entre 2 et 60 secondes, de préférence entre 4 et 30 secondes et de manière particulièrement préférable entre 5 et 20 secondes.

6. Procédé selon l'une quelconque des revendications 1 à 5, dans lequel la température de la phase de prépolymère est entre 10°C et 100°C, de préférence entre 20°C et 80°C et de manière particulièrement préférable entre 30°C et 70°C et la température de la phase aqueuse est entre 0°C et 70°C, de préférence entre 5°C et 60°C et de manière particulièrement préférable entre 10°C et 50°C.

7. Procédé selon l'une quelconque des revendications 1 à 6, dans lequel le réservoir de stockage dans lequel la dispersion aqueuse de polyuréthane est recueillie est un ou plusieurs réservoirs et/ou est équipé d'un dispositif d'agitation.
